# EUROPÄISCHE PATENTSCHRIFT

(11) **EP 1 080 993 B1**
(45) Veröffentlichungstag und Bekanntmachung des Hinweises auf die Patenterteilung: **31.08.2005**
(21) Anmeldenummer: 00118161.9
(22) Anmeldetag: 30.08.2000
(51) Int. Cl.: B60R 16/02

(54) **Verfahren und Vorrichtung zur Darstellung von Füllstandsdaten von Betriebsflüssigkeiten**
Method and device for displaying the fill level of operative fluids
Procédé et dispositif de visualisation des niveaux de remplissage de fluides de fonctionnement

(30) Priorität: 03.09.1999 DE 19941946
(43) Veröffentlichungstag der Anmeldung: 07.03.2001
(73) Patentinhaber: Volkswagen Aktiengesellschaft, 38436 Wolfsburg (DE)
(72) Erfinder: Lilienthal, Jörg, 38518 Gifhorn (DE); Heimermann, Matthias, 38302 Wolfenbüttel (DE)

(56) Entgegenhaltungen:
- EP-A- 0 447 580
- WO-A-92/04693
- US-A- 4 442 424

## Beschreibung

Die Erfindung betrifft eine Verfahren und eine Anzeigeeinrichtung zur Darstellung von Füllstandsdaten von Betriebsfluiden, insbesondere von Betriebsflüssigkeiten und/oder -gasen. Ein Verfahren gemäß dem Oberbegriff des Anspruchs 1 und eine Anzeigeeinrichtung gemäß dem Oberbegriff des Anspruchs 9 sind aus der US 4 442 424 A bekannt.

Ein ausreichender Füllstand von Betriebsfluiden ist für die Funktionalität der jeweils betroffenen Fahrzeugkomponenten unabdingbar, so daß die Füllstände vom Kraftfahrzeugführer ständig kontrolliert werden müssen. Für den Kraftstoffinhalt sind beispielsweise skalenförmige Kraftstoffanzeigen bekannt, die einen groben Überblick für den Kraftfahrzeugführer liefern. Im unteren Bereich ist die Skala andersfarbig unterlegt, um den Kraftfahrzeugführer zu warnen, daß die verbleibende Kraftstoffmenge nur noch für eine begrenzte Fahrleistung von beispielsweise 100 km reicht. Für andere Betriebsfluide existieren zum Teil keine Anzeigen und der Kraftfahrzeugführer muß manuell die Füllstände visuell beispielsweise mit Meßstäben kontrollieren. Dies ist zum Teil sehr mühselig, da hierzu der Kraftfahrzeugführer die Motorhaube öffnen muß und im Motorraum hantieren muß. Dies führt dazu, daß diese Kontrollen häufig nicht durchgeführt werden.

Der Erfindung liegt daher das technische Problem zugrunde, ein Verfahren und eine Vorrichtung sowie eine Anzeigeeinrichtung zur Darstellung von Füllstandsdaten mindestens eines Betriebsfluids zu schaffen, mittels derer die Füllstände einfach und übersichtlich durch den Kraftfahrzeugführer kontrolliert werden könnten, und mittels deren der Kraftfahrzeugführer gleich ein Gefühl für die Menge, die nachzufüllen wäre, erhält.

Die Lösung des technischen Problems ergibt sich durch die Gegenstände mit den Merkmalen des Patentansprüche 1 und 9. Weitere vorteilhafte Ausgestaltungen der Erfindung ergeben sich aus den Unteransprüchen.

Hierzu werden in einem Steuergerät a priori - Information über mindestens einen Füllstand der konstruktiv festgelegt ist, abgelegt bzw. das Steuergerät hat Zugriff auf diese a priori-Information. Dieser maximale Füllstand stellt eine Bezugsgröße dar, auf die bezogen die Ist-Werte der Füllstände dargestellt werden. Hierzu wird zunächst der alphanumerisch vorliegende Wert für den maximalen Füllstand in ein grafisches Element bestimmter Länge umgesetzt, dessen Gesamtlänge somit 100 % Füllstand darstellt. Da sich die maximalen Füllstände während der Betriebsdauer nicht ändern, können die Daten für die grafischen Elemente bereits fest in das Steuergerät implementiert werden. In einem zweiten Schritt erfaßt oder ermittelt das Steuergerät den Ist-Wert des Betriebsfluids. Dazu greift das Steuergerät auf die Daten von Sensoren zur Erfassung der Füllstände und/oder auf die Daten von Steuergeräten, in denen die Ist-Werte vorhanden sind, zurück. Dieser Ist-Wert wird in ein graphisches Element gewandelt, dessen Erstreckung die Relation zwischen der Größe des maximalen Füllstandes und/oder seinem Istwert wiedergibt. Anschließend werden die grafischen Elemente gemeinsam auf einer Anzeigeeinheit dargestellt, wobei das grafische Element des Istwertes neben oder in dem grafischen Element für den maximalen Füllstand angeordnet ist, so daß die Größe des Istwertes in Relation zum maximalen Füllstand dem Kraftfahrzeugführer leicht erfaßbar einen guten Überblick über den aktuellen Füllstand liefert. Des weiteren ist dem grafischen Element ein Feld zugeordnet, in dem alphanumerisch der absolute Verbrauch dargestellt ist.

Zusätzlich kann der absolute Füllstand dargestellt sein.

In einer bevorzugten Ausführungsform sind die grafischen Elemente als Balken ausgebildet, so daß sich für den Betrachter das Bild einer Fluidsäule ergibt.

Verzugsweise werden neben dem grafischen Element alphanumerisch Mengenangaben und/oder Prozentzahlen als Stützstellen dargestellt, um eine verbesserte und schnellere Abschätzung des Füllstandes zu erreichen.

In einer weiteren bevorzugten Ausführungsform sind dem Steuergerät Grenzwerte für die einzelnen Betriebsflüssigkeiten zugeordnet, wobei das graphische Element für den Ist-Wert bei Unterschreitung des Grenzwertes optisch hervorgehoben wird, wozu dieser beispielsweise in einer anderen Farbe und/oder aufblinkend dargestellt wird.

Gemäß einer Ausgestaltung werden mehrere Füllstände auf der Anzeigeeinrichtung dargestellt.

Gemäß der Erfindung ist zumindest einer der Füllstände des Kraftstoffes, des Motoröls, des Kühlmittels, der Bremsflüssigkeit des Waschwassers oder der Luftdruck im Reifen dargestellt bzw. zeitweise darstellbar. Die Anzeigeeinrichtung kann dabei ein Teil eines Kombiinstrumentes oder einer Multifunktionsbedieneinrichtung, wie sie aus der EP 701 926 A2 bekannt ist, sein, wobei insbesondere bei letzterer die Anzeige mindestens eines Füllstandes Teil eines Menüpunktes ist.

Die Erfindung wird nachfolgend anhand eines bevorzugten Ausführungsbeispieles näher erläutert. Die einzige Figur zeigt eine Darstellung der Füllstände verschiedener Betriebsflüssigkeiten.

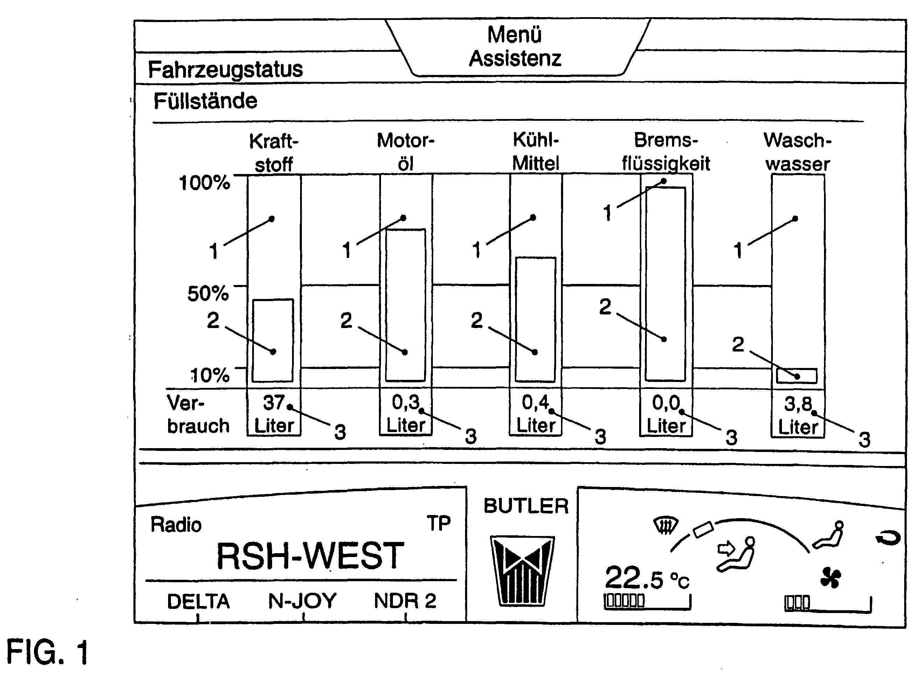

In der Fig. 1 sind beispielhaft Füllstände für die Betriebsflüssigkeiten Kraftstoff, Motoröl, Kühlmittel, Bremsflüssigkeit und Waschwasser dargestellt. Hierzu ist jeder Betriebsflüssigkeit ein erster Balken 1 zugeordnet, wobei die Länge aller Balken 1 gleich groß ist. Die Gesamtlänge des jeweiligen Balkens 1 entspricht dabei dem maximalen Füllstand der Betriebsflüssigkeit. In dem jeweiligen Balken 1 ist ein zweiter Balken 2 angeordnet, dessen Länge dem Ist-Wert der Betriebsflüssigkeit im Verhältnis zum maximalen Füllstand entspricht. Neben dem linken Balken 1 für den Kraftstoff sind alphanumerisch an der jeweiligen prozentualen Position Prozentzahlen für 100, 50 und 10% dargestellt, die für alle Balken 1 dienen, wobei zusätzlich zur besseren Zuordnung an der jeweiligen Position horizontale Linien zwischen den Balken 1 zugeordnet sind. Des weiteren ist unter jeden Balken 1 ein Feld 3 angeordnet, in dem alphanumerisch der absolute Verbrauch der jeweiligen Betriebsflüssigkeit dargestellt ist. Der Balken 2 für das Waschwasser ist im Vergleich zu den anderen Balken 2 in einer anderen Farbe dargestellt, da der Ist-Wert unter die 10%-Grenze gefallen ist, so daß ein baldiges Nachfüllen von Waschwasser angeraten ist. Die Grenzwerte für die jeweilige Betriebsflüssigkeit können fest bei der 10%-igen Grenze festgelegt werden oder aber spezifisch für die einzelne Betriebsflüssigkeit festgelegt werden. Über die alphanumerische Angabe im Feld 3 erhält der Kraftfahrzeugführer somit gleich ein Gefühl für die Menge, die nachzufüllen wäre. Des weiteren ist es möglich zwischen dieser graphischen Darstellung und einer nur alphanumerischen Darstellung wahlweise zu wechseln.

## Patentansprüche

1. Verfahren zur Darstellung von Füllstandsdaten mindestens eines Betriebsfluids, insbesondere einer Betriebsflüssigkeit und/oder eines Betriebsgases eines Kraftfahrzeuges, mittels mindestens eines Steuergerätes und einer Anzeigeeinrichtung, wobei das Steuergerät a priori Informationen über den maximalen Füllstand oder des Fülldruckes des mindestens einen Betriebsfluids verfügt und auf den Ist-Wert des mindestens einen Betriebsfluids zugreifen kann, umfassend folgende Verfahrensschritte:
- Darstellen des maximalen Füllstandes oder des Fülldruckes als graphisches Element (1) bestimmter Erstreckung,
- Erfassen des Ist-Wertes des Betriebsfluids,
- Erzeugen und Darstellen eines weiteren graphischen Elementes (2) für den Ist Wert neben oder in dem graphischen Element (1), wobei die Erstreckungen der graphischen Elemente (1 und 2) die prozentuale Relation zwischen maximalen Füllstand oder des Fülldruckes und seinem Istwert wiedergibt, weiter **gekennzeichnet durch**:
- Zuordnen jeweils eines Feldes (3) zu dem graphischen Element (2), in dem alphanumerisch der absolute Verbrauch dargestellt ist.

2. Verfahren nach Anspruch 1, **dadurch gekennzeichnet, dass** zusätzlich der absolute Füllstand oder Fülldruck in dem Feld (3) dargestellt ist.

3. Verfahren nach Anspruch 1 oder 2, **dadurch gekennzeichnet, dass** die graphischen Elemente (1 und 2) Balken sind.

4. Verfahren nach einem der Ansprüche 1 bis 3, **dadurch gekennzeichnet, dass** mehrere Füllstände und/oder Fülldrücke als graphische Elemente (1 und 2) nebeneinander dargestellt werden.

5. Verfahren nach einem der Ansprüche 1 bis 4, **dadurch gekennzeichnet, dass** zumindest neben dem graphischen Element (2) alphanumerische Mengen- und/oder Prozentzahlen dargestellt werden.

6. Verfahren nach einem der Ansprüche 1 bis 5, **dadurch gekennzeichnet, dass** im Steuergerät für mindestens ein Betriebsfluid mindestens ein Grenzwert zugeordnet ist, wobei das graphische Element (2) für den Istwert bei Unterschreitung des Grenzwertes optisch hervorgehoben dargestellt wird.

7. Verfahren nach Anspruch 6, **dadurch gekennzeichnet, dass** das graphische Element (2) in einer anderen Farbe oder aufblinkend dargestellt wird.

8. Verfahren nach einem der Ansprüche 1 bis 7, **dadurch gekennzeichnet, dass** zumindest einer der Füllstände oder Fülldrücke des Kraftstoffes, des Motoröls, des Kühlmittels, der Bremsflüssigkeit, des Waschwassers der Wischanlage oder der Luftdruck in den Reifen dargestellt wird.

9. Anzeigeeinrichtung zur Darstellung von Füllstandsdaten oder Fülldruckdaten mindestens eines Betriebsfluids, insbesondere einer Betriebsflüssigkeit und/oder eines
Betriebsgases, für ein Kraftfahrzeug, wobei
der maximale Füllstand oder der maximale Fülldruck mindestens eines Betriebsfluids als graphisches Element (1) bestimmter Erstreckung und der Istwert der Betriebsgröße als weiteres graphisches Element (2) neben oder in dem graphischen Element (1) dargestellt oder darstellbar ist, wobei die Erstreckungen der graphischen Elemente (1 und 2) die prozentuale Relation zwischen maximalen Füllstand oder maximalen Fülldruck und Ist-Wert wiedergeben,
**dadurch gekennzeichnet, dass**
dem graphischen Element (2) jeweils ein Feld (3) zugeordnet ist, in dem alphanumerisch der absolute Verbrauch dargestellt ist.

10. Anzeigeeinrichtung nach Anspruch 9, **dadurch gekennzeichnet, dass** zusätzlich der absolute Füllstand oder Fülldruck in dem Feld (3) dargestellt ist.

11. Anzeigeeinrichtung nach Anspruch 9 oder 10, **dadurch gekennzeichnet, dass** die graphischen Elemente (1 und 2) Balken sind.

12. Anzeigeeinrichtung nach einem der Ansprüche 9 bis 11, **dadurch gekennzeichnet, dass** mehrere Füllstände und/oder -drücke als graphische Elemente (1 und 2) nebeneinander dargestellt oder darstellbar sind.

13. Anzeigeeinrichtung nach einem der Ansprüche 9 bis 12, **dadurch gekennzeichnet, dass** zumindest neben dem graphischen Element (2) alphanumerische Mengen- und/oder Prozentzahlen dargestellt sind.

14. Anzeigeeinrichtung nach einem der Ansprüche 9 bis 13, **dadurch gekennzeichnet, dass** das graphische Element (2) bei Unterschreitung eines Grenzwertes durch den Ist-Wert optisch hervorgehoben dargestellt ist.

15. Anzeigeeinrichtung nach einem der Ansprüche 9 bis 14, **dadurch gekennzeichnet, dass** zumindest einer der Füllstände oder Fülldrücke des Kraftstoffes, des Motoröls, des Kühlmittels, der Bremsflüssigkeit, des Waschwassers der Wischeranlage oder der Luftdruck in den Reifen dargestellt oder darstellbar ist.

16. Anzeigeeinrichtung nach einem der Ansprüche 9 bis 15, **dadurch gekennzeichnet, dass** die Anzeigeeinrichtung ein Teil eines Kombiinstrumentes und/oder einer Multifunktionsbedieneinrichtung ist.

17. Anzeigeeinrichtung nach einem der Ansprüche 9 bis 16, **dadurch gekennzeichnet, dass** die Anzeigeeinrichtung mit mindestens einem Steuergerät verbunden ist, wobei das Steuergerät einen Speicher zur Speicherung des maximalen Füllstandes oder des maximalen Fülldruckes von mindestens einem Betriebsfluid umfasst und das Steuergerät mit mindestens einem Sensor und/oder mindestens einem Steuergerät zur Erfassung des Istwertes des Füllstandes oder des Fülldruckes des mindestens einen Betriebsfluids verbunden ist.

18. Anzeigeeinrichtung nach Anspruch 17, **dadurch gekennzeichnet, dass** zusätzlich in dem Speicher mindestens ein Grenzwert für die einzelnen Betriebsfluids abgelegt ist.

19. Anzeigeeinrichtung nach Anspruch 17 oder 18, **dadurch gekennzeichnet, dass** das Steuergerät über mindestens einen Datenbus mit den Sensoren und/oder Steuergeräten verbunden ist.

## Claims

1. Method for displaying fill level data of at least one operational fluid, in particular an operational fluid and/or an operational gas of a motor vehicle, by means of at least one control device and one display device, wherein the control device has a priori information about the maximum fill level or the filling pressure of the at least one operational fluid, and can access the actual value of the at least one operational fluid, comprising the following method steps:
- the maximum fill level or the filling pressure is displayed as a graphic element (1) with a specific extent,
- the actual value of the operational fluid is sensed,
- a further graphic element (2) is generated and displayed for the actual value next to or in the graphic element (1), wherein the extent of the graphic elements (1 and 2) represents the percentage relation between the maximum fill level or the filling pressure and its actual value, further **characterized by**:
- a field (3) in which the absolute consumption is displayed alphanumerically being assigned in each case to the graphic element (2).

2. Method according to Claim 1, **characterized in that** the absolute fill level or filling pressure is additionally displayed in the field (3).

3. Method according to Claim 1 or 2, **characterized in that** the graphic elements (1 and 2) are bars.

4. Method according to one of Claims 1 to 3, **characterized in that** a plurality of fill levels and/or filling pressures are displayed as graphic elements (1 and 2) one next to the other.

5. Method according to one of Claims 1 to 4, **characterized in that** alphanumeric quantity numbers and/or percentages are displayed at least next to the graphic element (2).

6. Method according to one of Claims 1 to 5, **characterized in that** at least one limiting value is assigned in the control device for at least one operational fluid, wherein the graphic element (2) for the actual value is displayed in a visually highlighted fashion when the value drops below the limiting value.

7. Method according to Claim 6, **characterized in that** the graphic element (2) is displayed in a different colour or in a flashing fashion.

8. Method according to one of Claims 1 to 7, **characterized in that** at least one of the fill levels or filling pressures of the fuel, of the engine oil, of the coolant, of the brake fluid, of the washing water of the windscreen wiping system or the air pressure in the tyres is displayed.

9. Display device for displaying fill level data or filling pressure data of at least one operational fluid, in particular an operational liquid and/or an operational gas for a motor vehicle, wherein the maximum fill level or the maximum filling pressure of at least one operational fluid is displayed or can be displayed as a graphic element (1) with a specific extent, and the actual value of the operational variable is displayed or can be displayed as a further graphic element (2) next to or in the graphic element (1), wherein the extents of the graphic elements (1 and 2) represent the percentage relation between the maximum fill level or maximum filling pressure and actual value, **characterized in that** a field (3) in which the absolute consumption is displayed alphanumerically is assigned in each case to the graphic element (2).

10. Display device according to Claim 9, **characterized in that** the absolute fill level or filling pressure is additionally displayed in the field (3).

11. Display device according to Claim 9 or 10, **characterized in that** the graphic elements (1 and 2) are bars.

12. Display device according to one of Claims 9 to 11, **characterized in that** a plurality of fill levels and/or filling pressures are displayed or can be displayed as graphic elements (1 and 2) one next to the other.

13. Display device according to one of Claims 9 to 12, **characterized in that** alphanumeric quantity numbers and/or percentages are displayed at least next to the graphic element (2).

14. Display device according to one of Claims 9 to 13, **characterized in that** the graphic element (2) is displayed in a visually highlighted fashion when the actual value drops below a limiting value.

15. Display device according to one of Claims 9 to 14, **characterized in that** at least one of the fill levels or filling pressures of the fuel, of the engine oil, of the coolant, of the brake fluid, of the washing water of the windscreen wiper system or the air pressure in the tyres is displayed or can be displayed.

16. Display device according to one of Claims 9 to 15, **characterized in that** the display device is part of a combination instrument and/or of a multifunction operator control device.

17. Display device according to one of Claims 9 to 16, **characterized in that** the display device is connected to at least one control device, wherein the control device comprises a memory for storing the maximum fill level and/or the maximum filling pressure of at least one operational fluid, and the control device is connected to at least one sensor and/or at least one control device for sensing the actual value of the fill level or the filling pressure of the at least one operational fluid.

18. Display device according to Claim 17, **characterized in that** at least one limiting value for the individual operational fluids is additionally stored in the memory.

19. Display device according to Claim 17 or 18, **characterized in that** the control device is connected to the sensors and/or control devices via at least one databus.

## Revendications

1. Procédé de représentation de données de niveau de remplissage d'au moins un fluide de fonctionnement, notamment d'un liquide de fonctionnement et/ou d'un gaz de fonctionnement d'un véhicule automobile, au moyen d'au moins un appareil de commande et d'un dispositif d'affichage, l'appareil de commande disposant d'informations a priori sur le niveau de remplissage maximal ou sur la pression de remplissage de l'au moins un fluide de fonctionnement et pouvant avoir accès à la valeur réelle de l'au moins un fluide de fonctionnement, comprenant les étapes de procédé suivantes :
- représentation du niveau de remplissage maximal ou de la pression de remplissage sous forme d'élément graphique (1) de dimension déterminée,
- détection de la valeur réelle du fluide de fonctionnement,
- production et représentation d'un autre élément graphique (2) pour la valeur réelle à côté de l'élément graphique (1) ou dans celui-ci, les dimensions des éléments graphiques (1 et 2) reproduisant la relation en pourcentage entre le niveau de remplissage maximal ou la pression de remplissage et sa valeur réelle,
**caractérisé en outre par :**
- l'affectation d'un champ respectif (3) à l'élément graphique (2), dans lequel la consommation absolue est représentée sous forme alphanumérique.

2. Procédé selon la revendication 1, **caractérisé en ce que** le niveau de remplissage absolu ou la pression de remplissage absolue sont en outre représentés dans le champ (3).

3. Procédé selon la revendication 1 ou 2, **caractérisé en ce que** les éléments graphiques (1 et 2) sont des barres.

4. Procédé selon l'une quelconque des revendications 1 à 3, **caractérisé en ce que** plusieurs niveaux de remplissage et/ou pressions de remplissage sont représentés les uns à côté des autres sous forme d'éléments graphiques (1 et 2).

5. Procédé selon l'une quelconque des revendications 1 à 4, **caractérisé en ce qu'**au moins des valeurs alphanumériques quantitatives et/ou en pourcentages sont représentées à côté de l'élément graphique (2).

6. Procédé selon l'une quelconque des revendications 1 à 5, **caractérisé en ce qu'**une valeur limite est associée dans l'appareil de commande pour au moins un fluide de fonctionnement, l'élément graphique (2) pour la valeur réelle étant illustré de manière à ressortir visuellement lorsqu'elle est inférieure à la valeur limite.

7. Procédé selon la revendication 6, **caractérisé en ce que** l'élément graphique (2) est représenté dans une autre couleur ou sous forme clignotante.

8. Procédé selon l'une quelconque des revendications 1 à 7, **caractérisé en ce qu'**au moins l'un des niveaux de remplissage ou des pressions de remplissage du carburant, de l'huile de moteur, du réfrigérant, du liquide de frein, de l'eau de lavage des essuie-glace ou de la pression d'air dans les pneus est indiqué.

9. Dispositif d'affichage pour représenter des données de niveau de remplissage ou des données de pressions de remplissage d'au moins un fluide de fonctionnement, notamment d'un liquide de fonctionnement et/ou d'un gaz de fonctionnement, pour un véhicule automobile, dans lequel :
le niveau de remplissage maximal ou la pression de remplissage maximale d'au moins un fluide de fonctionnement est représenté ou peut être représenté sous forme d'élément graphique (1) de dimension déterminée et la valeur réelle de la grandeur de fonctionnement est représentée ou peut être représentée sous forme d'un autre élément graphique (2) à côté de l'élément graphique (1) ou dans celui-ci, les dimensions des éléments graphiques (1 et 2) reproduisant la relation en pourcentage entre le niveau de remplissage maximal ou la pression de remplissage maximale et la valeur réelle,
**caractérisé en ce que**
un champ respectif (3) est associé à l'élément graphique (2), dans lequel est représentée la consommation absolue sous forme alphanumérique.

10. Dispositif d'affichage selon la revendication 9, **caractérisé en ce que** le niveau de remplissage absolu ou la pression de remplissage absolue sont en outre représentés dans le champ (3).

11. Dispositif d'affichage selon la revendication 9 ou 10, **caractérisé en ce que** les éléments graphiques (1 et 2) sont des barres.

12. Dispositif d'affichage selon l'une quelconque des revendications 9 à 11, **caractérisé en ce que** plusieurs niveaux de remplissage et/ou pressions de remplissage sont représentés ou peuvent être représentés les uns à côté des autres sous forme d'éléments graphiques (1 et 2).

13. Dispositif d'affichage selon l'une quelconque des revendications 9 à 12, **caractérisé en ce qu'**au moins des valeurs alphanumériques quantitatives et/ou en pourcentages sont représentées à côté de l'élément graphique (2).

14. Dispositif d'affichage selon l'une quelconque des revendications 9 à 13, **caractérisé en ce que** l'élément graphique (2) est illustré de manière à ressortir visuellement lorsque la valeur réelle est inférieure à une valeur limite.

15. Dispositif d'affichage selon l'une quelconque des revendications 9 à 14, **caractérisé en ce qu'**au moins l'un des niveaux de remplissage ou des pressions de remplissage du carburant, de l'huile de moteur, du réfrigérant, du liquide de frein, de l'eau de lavage des essuie-glace ou de la pression d'air dans les pneus est indiqué ou peut être indiqué.

16. Dispositif d'affichage selon l'une quelconque des revendications 9 à 15, **caractérisé en ce que** le dispositif d'affichage fait partie d'un combi-instrument et/ou d'un dispositif de commande multifonction.

17. Dispositif d'affichage selon l'une quelconque des revendications 9 à 16, **caractérisé en ce que** le dispositif d'affichage est connecté à au moins un appareil de commande, l'appareil de commande comprenant une mémoire pour mémoriser le niveau de remplissage maximal ou la pression de remplissage maximale d'au moins un fluide de fonctionnement et l'appareil de commande étant connecté à au moins un capteur et/ou à au moins un appareil de commande pour détecter la valeur réelle du niveau de remplissage ou de la pression de remplissage de l'au moins un fluide de fonctionnement.

18. Dispositif d'affichage selon la revendication 17, **caractérisé en ce qu'**au moins une valeur limite pour les fluides de fonctionnement individuels est saisie en outre dans la mémoire.

19. Dispositif d'affichage selon la revendication 17 ou 18, **caractérisé en ce que** l'appareil de commande est connecté par le biais d'au moins un bus de données aux capteurs et/ou aux appareils de commande.
